# EUROPÄISCHE PATENTSCHRIFT

(11) **EP 2 099 830 B1**
(45) Veröffentlichungstag und Bekanntmachung des Hinweises auf die Patenterteilung: **22.07.2015**
(21) Anmeldenummer: 07847378.2
(22) Anmeldetag: 27.11.2007
(51) Int. Cl.: C08F 6/00, C08K 3/34

(54) **STYROL-HALTIGE POLYMERE MIT ZEOLITH VOM MFI-TYP**
STYRENE-CONTAINING POLYMERS CONTAINING A ZEOLITE OF THE MFI TYPE
POLYMÈRES CONTENANT DU STYRÈNE AVEC DE LA ZÉOLITE DE TYPE MFI

(30) Priorität: 01.12.2006 EP 06125236
(43) Veröffentlichungstag der Anmeldung: 16.09.2009
(73) Patentinhaber: Styrolution Europe GmbH, 60325 Frankfurt am Main (DE)
(72) Erfinder: STEIGELMANN, Melanie, 68535 Edingen-Neckarhausen (DE); DESBOIS, Philippe, 68535 Edingen-neckarhausen (DE); NIESSNER, Norbert, 67159 Friedelsheim (DE); SUWIER, Davy Roger, 68161 Mannheim (DE); MÜLLER, Ulrich, 67435 Neustadt (DE)
(74) Vertreter: Jacobi, Markus Alexander
(86) Internationale Anmeldenummer: PCT/EP2007/062851
(87) Internationale Veröffentlichungsnummer: WO 2008/065098

(56) Entgegenhaltungen:
- DE-A1-102005 001 793
- DATABASE WPI Week 200650 Derwent Publications Ltd., London, GB; AN 2006-485276 XP002463755 -& JP 2006 182840 A (SUMITOMO DOW LTD) 13. Juli 2006 (2006-07-13)
- DATABASE WPI Week 200661 Derwent Publications Ltd., London, GB; AN 2006-595017 XP002463756 & WO 2006/088003 A (MITSUBISHI ENG PLASTICS KK) 24. August 2006 (2006-08-24) -& JP 2006 257404 A (MITSUBISHI ENG PLASTIC CORP) 28. September 2006 (2006-09-28)
- DATABASE WPI Week 200313 Derwent Publications Ltd., London, GB; AN 2003-131970 XP002463775 -& JP 2002 227386 A (KANEKA CORP) 14. August 2002 (2002-08-14)
- "RESIDUAL STYRENE MONOMER REDUCTION IN SYNDIOTACTIC POLYSTRYRENES" RESEARCH DISCLOSURE, MASON PUBLICATIONS, HAMPSHIRE, GB, Nr. 366, 1. Oktober 1994 (1994-10-01), Seiten 557-558, XP000485871 ISSN: 0374-4353

## Beschreibung

Die Erfindung betrifft Formmassen, umfassend wenigstens ein Styrol-haltiges Polymer und wenigstens ein zeolithisches Material vom Strukturtyp MFI in H-Form, ein Verfahren zum Entfernen von Styrolmonomer aus Styrol-haltigem Polymer sowie die Verwendung von wenigstens einem zeolithischen Material vom Strukturtyp MF! zum Entfernen von Styrolmonomer aus einer Formmasse, umfassend Styrol-haltiges Polymer.

Die Verwendung von zeolithischem Material in Verbindung mit Polymeren ist bekannt.

So ist in EP 1 170 327 A1 ein Kunststoff beschrieben, der mindestens einen Zeolithen zur Adsorption von flüchtigen organischen Verbindungen, insbesondere Ethylen, aus Gasen oder Gasgemischen enthält. Als Grundmaterial kommt eine ganze Reihe von Polymeren in Fragen, wobei unter anderem Polystyrol genannt ist. Es wird jedoch in keinem der Beispiele Polystyrol verwendet. Die Zeolithe sollen einen hydrophoben Charakter haben und es werden verschiedenste Zeolithe genannt, wobei auch Zeolithe vom Strukturtyp MFI erwähnt werden.

DE 100 62 558 beschreibt ein Verfahren zur Entfernung unerwünschter Gerüche durch Adsorption der Geruch-erzeugenden Substanzen an mesoporösen Kieselsäuren oder Metallsilikaten sowie Kunststoffe, in denen poröse Kieselsäuren oder Metallsilikate enthalten sind. Als Grundmaterialien kommt wiederum eine ganze Reihe von Polymeren in Fragen, wobei Polystyrol ebenfalls genannt ist.

EP 0 839 071 B1 beschreibt eine Membran zur Pervaporation von flüchtigen organischen Verbindungen aus Wasser, die eine mit wenigstens einem hydrophoben Adsorbens gefüllte polymere Membran umfasst. Die polymere Membran kann aus einer Vielzahl an Polymeren bestehen, wobei unter anderem Styrolbutadiengummi genannt ist. Das hydrophobe Adsorbens kann ebenfalls aus einer Vielzahl an Materialien ausgewählt werden, wobei dabei auch Zeolithe genannt werden

US 2,977,346 beschreibt ein Verfahren zum Abtrennen von unreagiertem aromatischen Kohlenwasserstoff-Monomeren aus einem Reaktionsprodukt einer Polymerisation eines Kohlenwasserstoffs durch Lösen wenigstens eines Teils des Reaktionsprodukts mit dem unreagiertem aromatischen Monomer in einem parafinischen Lösungsmittel und In-Kontakt-bringen dieser Lösung mit einem kristallinen metallischem Aluminosilicat. Die Verwendung von Zeolithen vom Strukturtyp MFI ist nicht erwähnt.

EP 1 149 863 A1 beschreibt farblose und emissionsarme Kunststoffe, die wenigstens einen Zeolith vom Strukturtyp MFI enthalten. Als Grundmaterial können übliche Kunststoffe verwendet werden, wobei in einer langen Liste an möglichen Kunststoffen auch Polystyrol genannt ist. In den Beispielen wird kein Polystyrol verwendet.

WO 01/34689 beschreibt eine wässrige polymere Zusammensetzung zum Herstellen von Bodenbelägen mit wenig Geruch mit einem wässrigen dispergierten polymeren Material und einem Zeolith. Als mögliche Materialien für die wässrigen polymeren Materialien werden in einer Vielzahl von Möglichkeiten auch Styrol-Copolymere genannt. Nach den Beispielen wird jedoch ausschließlich Polyurethan verwendet.

WO 01/10966 beschreibt eine Klebstoffzusammensetzung auf Wasserbasis, mit verschiedenen Komponenten, unter anderem einem Polymer und einem Füllstoff. Das Polymer kann aus einer Vielzahl von Polymeren ausgewählt werden, unter anderem Styrol-Copolymeren. Allerdings sind alle beschriebenen Zusammensetzungen wässrig und keine Formmassen. Die Verwendung von Zeolithen vom Strukturtyp MFI ist nicht erwähnt.

Der vorliegenden Erfindung lag die Aufgabe zugrunde, den zuvor genannten Nachteilen abzuhelfen.

Dabei wurde ein einfaches Verfahren entwickelt, bei dem Styrol-haltige Polymere erhalten werden, deren Gehalt an Styrolmonomer aus der Polymerisation verringert ist, und die damit erhaltenen Formmassen bereitzustellen.

Die Lösung der Aufgabe ist eine Formmasse, umfassend wenigstens ein Styrol-haltiges Polymer und wenigstens ein zeolithisches Material vom Strukturtyp MFI, wobei das zeolithische Material vom Strukturtyp MFI ausgewählt ist aus der Gruppe, bestehend aus kristallinen Aluminosilicaten und Titanaluminosilicaten, und in H-Form vorliegt und einen Porendurchmesser in einem Bereich von 0,45 bis 0,55 nm aufweist.

In einer bevorzugten Ausführungsform umfasst die erfindungsgemäße Formmasse ein Styrol-haltiges Polymer ausgewählt aus der Gruppe, bestehend aus Homo- und Copolymeren von Styrol, besonders bevorzugt ausgewählt aus der Gruppe Stryolhomopolymer, Standard Polystyrol (general purpose Polystyrol (GPPS)), hochschlagzähes Polystyrol (high impact Polystyrol (HIPS)), Styrol-Acrylonitril-Copolymer (SAN) und Acrylonitrilbutadien-Styrol (ABS) und insbesondere Styrolhomopolymer und SAN.

Der Begriff "Styrol", wie er im Sinne der vorliegenden Erfindung verwendet wird, bezeichnet unsubstituiertes Styrol und in α-Position und/oder am Kern ein- bis dreifach mit C1-C4-Alkyl oder Halogen substituierte Styrole, bevorzugt Styrol, α-Methylstyrol oder ρ-Methylstyrol. Besonders bevorzugt ist unsubstituiertes Styrol.

Styrol-haltige Copolymeren umfassen bevorzugt zusätzlich zu Styrol, wie vorstehend beschrieben, ethylenisch ungesättigte Monomere, besonders bevorzugt ausgewählt aus C₂- bis C₈-Monoolefine, wie Propylen, 1-Buten, 1-Hexen und 1-Okten, Acrylsäureester und Methacrylsäureester mit 1 bis 8 C-Atomen im Alkylrest, wie Methylmethacrylat, (Meth)acrylsäurebutylester und (Meth)acrylsäureethylhexylester, Acrylnitril, Methacrylnitril und Maleinsäurederivate, wie Maleinsäureanhydrid und Maleinsäureimid. Besonders bevorzugte weitere ethylenisch ungesättigte Monomere sind (Meth)acrylnitril, C₁-C₈-Alkyl(meth)acrylat und Maleinsäureanhydrid. Besonders bevorzugt ist Acrylnitril.

Insbesondere bevorzugt besteht die erfindungsgemäße Formmasse aus Styrol-haltigen Polymeren, d.h. es sind keine nicht Styrol-haltigen Polymere anwesend. Besonders bevorzugt umfasst die erfindungsgemäße Formmasse nur ein Styrol-haltiges Polymer.

In einer bevorzugten Ausführungsform umfasst die erfindungsgemäße Formmasse das Styrol-haltige Polymer in einer Menge von etwa 95 bis etwa 99,9 Gew.-%, besonders bevorzugt etwa 97,5 bis etwa 99,7 Gew.-%, besonders bevorzugt etwa 98 bis etwa 99,5 Gew.-%, basierend auf dem Gesamtgewicht der Formmasse.

Der Begriff "Zeolithische Material vom Strukturtyp MFI", wie er im Sinne der vorliegenden Erfindung verwendet wird, bezeichnet kristalline Aluminosilicate mit geordneten Kanal- und Käfigstrukturen. Das Netzwerk solcher Zeolithe ist aufgebaut aus SiO₄⁻ und AlO₄⁻-Tetraedern, die über gemeinsame Sauerstoffbrücken verbunden sind. Eine Beschreibung solcher Strukturen ist über Internet zugänglich, unter der URL http://topaz.ethz.ch/IZA-SC/searchRef.htm.

Zum Ausgleich der negativen Elektrovalenz, die durch den Einbau von AI(III) in das Si(IV)-Silicatgitter entsteht, findet man bei zeolithischen Materialien austauschfähige Kationen. Insbesondere kann es sich dabei - je nach Herstellverfahren des zeolithischen Materials - beispielsweise um Kationen des Natriums, Kaliums, Lithiums, Rubidiums oder Cäsiums handeln. Auch Ammoniumionen können als Kationen im zeolithischen Material enthalten sein. Ersetzt man diese Kationen gegen Protonen, beispielsweise durch einen Ionenaustausch, so erhält man die entsprechenden Materialien in der so genannten aciden Form, der H-Form.

In der bevorzugten Ausführungsform umfassen die erfindungsgemäßen Formmassen daher das zeolithische Material vom Strukturtyp MFI in H-Form.

Der Porendurchmesser des zeolithischen Materials liegt in einem Bereich von 0,30 bis 0,90 nm, besonders bevorzugt in einem Bereich von 0,45 bis 0,55 nm.

Die Partikelgröße des zeolithischen Materials liegt bevorzugt von 50 bis 5000 nm, bestimmt mittels REM.

Gemäß einer weiteren bevorzugten Ausführungsform weist das zeolithische Material wenigsten 10-Ring-Kanäle auf.

Die erfindungsgemäßen Formmassen umfassen wenigstens ein zeolithisches Material, wie ein, zwei, drei, vier oder mehr voneinander verschiedene zeolithische Materialien. Besonders bevorzugt umfassen die erfindungsgemäßen Formmassen ein einziges zeolithisches Material.

In einer bevorzugten Ausführungsform umfasst die erfindungsgemäße Formmasse ein zeolithische Material vom Strukturtyp MFI ausgewählt aus der Gruppe, bestehend aus kristallinen Aluminosilicaten und Titanaluminosilicaten.

Besonders bevorzugt ist ein Si:AI-Verhältnis, berechnet als molares Verhältnis SiO₂:Al2O₃, im Bereich von 1000:1 bis 10:1, bevorzugt 100:1 bis 10:1, besonders bevorzugt 11:1 bis 14:1, insbesondere (etwa) 12:1.

In einer bevorzugten Ausführungsform umfassen die erfindungsgemäßen Formmassen das zeolithische Material vom Strukturtyp MFI in einer Menge von etwa 0,1 bis etwa 5 Gew.-%, besonders bevorzugt etwa 0,3 bis etwa 2,5 Gew.-%, insbesondere etwa 0,5 bis etwa 2 Gew.-%, insbesondere bevorzugt etwa 2 Gew.-%, bezogen auf das Gesamtgewicht der Formmasse anwesend ist. Die Verringerung des Gehalts an Styrolmonomer und an Zeolith wurde gravimetrisch bzw. mittels GC bestimmt.

Es hat sich überraschend herausgestellt, dass durch die Verwendung von zeolithischem Material vom Strukturtyp MFI der Gehalt an Styrolmonomer in dem Styrol-haltigen Polymer merklich verringert werden kann. In einer besonders bevorzugten Ausführungsform haben die erfindungsgemäßen Formmassen daher einen Gehalt an Styrolmonomer, der um wenigstens etwa 5 Gew.-%, besonders bevorzugt etwa 10 Gew.-%, insbesondere etwa 20 Gew.-%, im Vergleich zu der Formmasse ohne das wenigstens eine zeollithische Material vermindert ist.

In einer weiteren Ausführungsform betrifft die vorliegende Erfindung ein Verfahren zum Entfernen von Styrolmonomer aus einer Formmasse, umfassend wenigstens ein Styrol-haltiges Polymer, umfassend die Schritte a) Zur Verfügung stellen einer festen Formmasse, umfassend wenigstens ein Styrol-haltiges Polymer, b) Zugeben eines zeolithischen Materials vom Strukturtyp MFI, und c) Erwärmen des nach Schritt b) erhaltenen Gemischs.

Die in Schritt a) zur Verfügung gestellte Formmasse mit dem Styrol-haltigen Polymer und das in Schritt b) zugegebene zeolithische Material vom Strukturtyp MFI sind bevorzugt wie vorstehend in Bezug auf die erfindungsgemäße Formmasse beschrieben. In einer bevorzugten Ausführungsform wird die Formmasse in Schritt a) in Form von Granulaten Pulvern, Lösungen oder Schmelzen zur Verfügung gestellt.

Bevorzugt wird in Schritt b) das zeolithische Material vom Strukturtyp MFI vor oder im Extruder bei Tmperaturen von 20 bis 250°C zugegeben und homogen mit der Formmasse vermischt. Insbesondere bevorzugt wird das zeolithische Material vom Strukturtyp MFI der festen Frommasse bei Raumtempertur zugegeben.

In Schritt c) wird die nach Schritt b) erhaltene Zusammensetzung erwärmt, bevorzugt auf eine Temperatur im Bereich von etwa 100 bis etwa 300 °C, insbesondere etwa 150 bis etwa 270 °C. In einer besonders bevorzugten Ausführungsform wird Schritt c) in einem Extruder, wie einem Zweiwellenextruder, zum Schmelzen (Ca. 150 bis 270°C, bevorzugt 180 bis 220°C, besonders bevorzugt 190 bis 210°C) erwärmt und gleichzeitig extrudiert.

Nach dem Erwärmen in Schritt c) kann das erhaltene Material abgekühlt werden. Dabei wird das Material fest. Das feste Material kann dann granuliert werden.

In einer weiteren Ausführungsform betrifft die vorliegende Erfindung die Verwendung wenigstens eines zeolithischen Materials vom Strukturtyp MFI zum Entfernen von Styrolmonomer aus einer Formmasse, umfassend wenigstens ein Styrol-haltiges Polymer.

Die Frommasse mit dem Styrol-haltigen Polymer und das zeolithische Material vom Strukturtyp MFI sind bevorzugt wie vorstehend in Bezug auf die erfindungsgemäße Formmasse beschrieben. Die Verwendung umfasst bevorzugt die Verwendung im erfindungsgemäßen Verfahren.

### Beispiele

### Zeolithisches Material

B3: Zeocat Z6-01-01 der Firma Zeochem AG, Uetikon, CH, FAU-Struktur, Natriumform, Si:AI-Verhältnis = 2,7 - 3, 12-Ring-Poren, Porendurchmesser 0,74 nm B4: Zeocat PZ 2/25Na der Firma Zeochem AG, Uetikon, CH, MFI-Struktur, Natriumform, Si:Al-Verhältnis = 12, 10-Ring-Poren, Porendurchmesser 0,55 nm B5: Zeocat PZ 2/25H der Firma Zeochem AG, Uetikon, CH, MFI-Struktur, H-form, Si:AI-Verhältnis = 10-Ring-Poren, Porendurchmesser 0,55 nm B6: TS1 (Laborprobe BASF), MFI-Struktur, Titanform, Si:AI-Verhältnis = 10-Ring-Poren, Porendurchmesser 0,55 nm

### Beispiel 1 bis 10

### Standard Polystyrol (general purpose Polystyrol (GPPS)

Zu 1000 g GPPS Granulat (VPT der Firma BASF) wurden x g eines Zeoliths zugegeben und in einem Kunststoff Behälter manuell vermischt. Das erhaltene Granulat wurde schließlich auf einem Zweiwellen extrudiert (ZSK 30, Kombination 55J). Der Extruder wurde bei 240°C betrieben mit einer Drehzahl von 250 Upm und einem Durchsatz von 10 kg/h. Das erhaltene Styrol-Polymer wurde granuliert.

Die Konzentrationen an Styrol in den erhaltenen Produkten wurden mittels GC gemessen und sind in der folgende Tabelle 1 zusammengestellt.

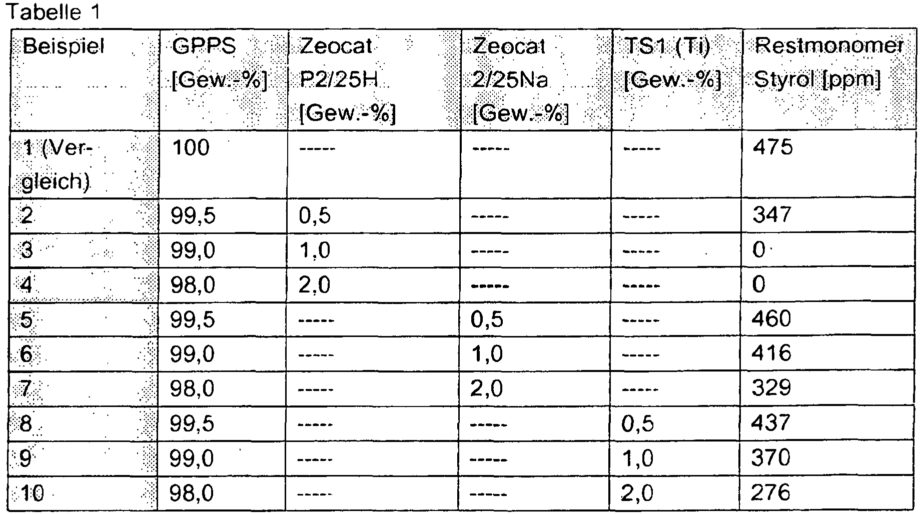

### Beispiel 2 bis 4, 7 und 10 wurden rosa bis violett

Beispiel 1 (Vergleichsbeispiel): reines GPPS wurde ohne Zeolith auf dem Extruder versetzt

### Beispiel 11 bis 20

### hochschlagzähes Polystyrol (high impact Polystyrol (HIPS)

Die Beispiele 11 bis 20 wurden wiederholt mit dem Unterschied, dass HIPS (PS 486M der Firma BASF) verwendet wurde.

Die Konzentrationen an Styrol in den erhaltenen Produkten wurden mittels GC gemessen und sind in der folgende Tabelle 2 zusammengestellt.

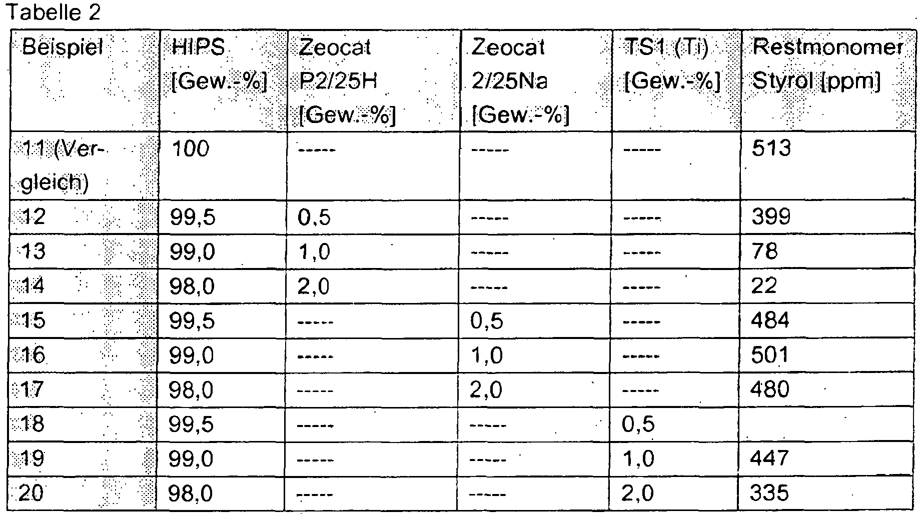

### Beispiel 12 bis 14 und 20 wurden rosa bis violett

### Beispiel 11 (Vergleichsbeispiel): reines HIPS wurde ohne Zeolith auf dem Extruder versetzt

### Beispiel 21 bis 29

### Styrol-Acrylonitril-Copolymer (SAN)

Zu 1000 g SAN Granulat (VLN der Firma BASF) wurden x g eines Zeoliths zugegeben und in einem Kunststoff Behälter manuell vermischt. Das erhaltene Granulat wurde schließlich auf einem Zweiwellen extrudiert (ZSK 30, Kombination 55J). Der Extruder wurde bei 240°C betrieben mit einer Drehzahl von 250 Upm und einem Durchsatz von 10 kg/h. Das erhaltene Styrol-Polymer wurde granuliert.

Die Konzentrationen an Styrol in den erhaltenen Produkten wurden mittels GC gemessen und sind in der folgende Tabelle 3 zusammengestellt.

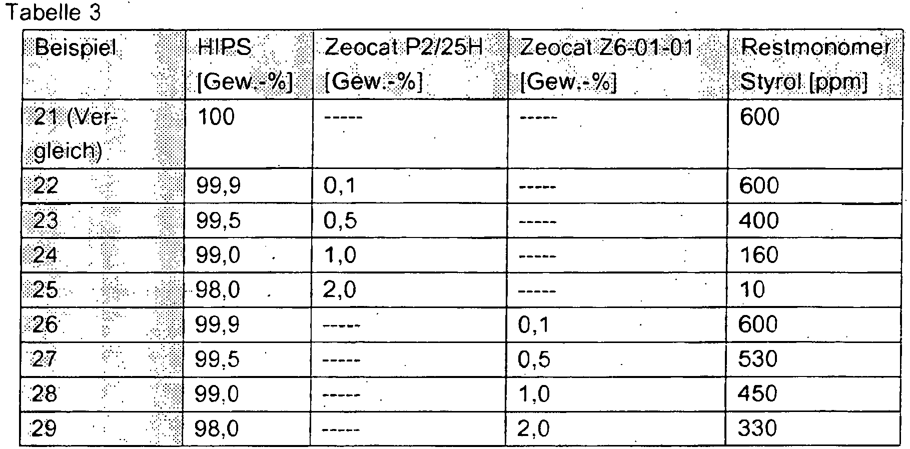

Beispiel 22 bis 25 wurden rosa bis violett

Vergleichsversuch 21 (V): reines SAN wurde ohne Zeolith auf dem Extruder versetzt

## Patentansprüche

1. Formmasse, umfassend wenigstens ein Styrol-haltiges Polymer und wenigstens ein zeolithisches Material vom Strukturtyp MFI, wobei das zeolithische Material vom Strukturtyp MFI ausgewählt ist aus der Gruppe, bestehend aus kristallinen Aluminosilicaten und Titanaluminosilicaten, und in H-Form vorliegt und einen Porendurchmesser in einem Bereich von 0,45 bis 0,55 nm aufweist.

2. Formmasse nach dem vorstehendenAnspruch, wobei das Styrol-haltige Polymer ausgewählt ist aus der Gruppe, bestehend aus Homo- und Copolymeren von Styrol.

3. Formmasse nach Anspruch 2, wobei das Styrol-haltige Polymer ausgewählt ist aus der Gruppe, bestehend aus Styrolhomopolymer, Standard Polystyrol (general purpose Polystyrol (GPPS)), hochschlagzähes Polystyrol (high impact Polystyrol (HIPS)), Styrol-Acrylonitril-Copolymer (SAN) und Acrylonitrilbutadien-Styrol (ABS).

4. Formmasse nach einem der vorstehenden Ansprüche, wobei das Styrol-haltige Polymer in einer Menge von etwa 95 bis etwa 99,9 Gew.-%, basierend auf dem Gesamtgewicht der Formmasse anwesend ist.

5. Formmasse nach einem der vorstehenden Ansprüche, wobei das zeolithische Material in einer Menge von etwa 0,1 bis etwa 5 Gew.-%, bezogen auf das Gesamtgewicht der Formmasse anwesend ist.

6. Formmasse nach einem der vorstehenden Ansprüche, wobei die Formmasse einen Gehalt an Styrolmonomer umfasst, der um wenigstens etwa 5 Gew.-% im Vergleich zu der Formmasse ohne das wenigstens eine zeollithische Material vermindert ist.

7. Verfahren zum Entfernen von Styrolmonomer aus einer Formmasse, umfassend wenigstens ein Styrol-haltiges Polymer, umfassend die Schritte
a) Zur Verfügung stellen einer festen Formmasse, umfassend wenigstens ein Styrol-haltiges Polymer,
b) Zugeben eines zeolithischen Materials vom Strukturtyp MFI, wobei das in Schritt b) zugegebene zeolithische Material vom Strukturtyp MFI ausgewählt ist aus der Gruppe, bestehend aus kristallinen Aluminosilicaten und Titanaluminosilicaten, und in H-Form vorliegt, und einen Porendurchmesser in einem Bereich von 0,45 bis 0,55 nm aufweist,
und
c) Erwärmen des nach Schritt b) erhaltenen Gemischs.

8. Verfahren nach Anspruch 7, wobei das wobei das in Schritt a) zur Verfügung gestellte Styrol-haltige Polymer ausgewählt ist aus der Gruppe, bestehend aus Homo- und Copolymeren von Styrol.

9. Verfahren nach Anspruch 8, wobei das Styrol-haltige Polymer ausgewählt ist aus der Gruppe, bestehend aus Styrolhomopolymer, Standard Polystyrol (general purpose Polystyrol (GPPS)), hochschlagzähes Polystyrol (high impact Polystyrol (HIPS)), SAN Styrol-Acrylonitril-Copolymer (SAN) und Acrylonitrilbutadien-Styrol (ABS).

10. Verfahren nach einem der Ansprüche 7 bis9, wobei das Styrol-haltige Polymer in Schritt a) in einer Menge von etwa 95 bis etwa 99,9 Gew.-%, basierend auf dem Gesamtgewicht der Formmasse zugegeben wird.

11. Verfahren nach einem der vorstehenden Ansprüche 7 bis10, wobei das zeolithische Material in Schritt b) in einer Menge von 0,1 bis 5 Gew.-%, bezogen auf das Gesamtgewicht der Formmasse zugegeben wird.

12. Verfahren nach einem der Ansprüche 7 bis11, wobei das nach Schritt c) erhaltene Gemisch einen Gehalt an Styrolmonomer umfasst, der um wenigstens etwa 5 Gew.-% im Vergleich zu der in Schritt a) zur Verfügung gestellten Formmasse vermindert ist.

13. Verwendung wenigstens eines zeolithischen Materials vom Strukturtyp MFI, wobei das zeolithische Material vom Strukturtyp MFI ausgewählt ist aus der Gruppe, bestehend aus kristallinen Aluminosilicaten und Titanaluminosilicaten, und in H-Form vorliegt und einen Porendurchmesser in einem Bereich von 0,45 bis 0,55 nm aufweist, zum Entfernen von Styrolmonomer aus einer Formmasse, umfassend wenigstens ein Styrol-haltiges Polymer.

## Claims

1. A molding composition, comprising at least one styrene polymer and comprising at least one zeolitic material of MFI structure type, where the zeolitic material of MFI structure type has been selected from the group consisting of crystalline aluminosilicates and titanium aluminosilicates, and is present in H form, and has a pore diameter in the range from 0.45 to 0.55 nm.

2. The molding composition according to the preceding claim, where the styrene polymer has been selected from the group consisting of homo- and copolymers of styrene.

3. The molding composition according to claim 2, where the styrene polymer has been selected from the group consisting of styrene homopolymer, standard polystyrene (general-purpose polystyrene (GPPS)), high-impact polystyrene (HIPS), styreneacrylonitrile copolymer (SAN), and acrylonitrilebutadiene-styrene (ABS).

4. The molding composition as claimed in any of the preceding claims, where the amount present of the styrene polymer is from about 95 to about 99.9% by weight, based on the total weight of the molding composition.

5. The molding composition according to any of the preceding claims, where the amount present of the zeolitic material is from about 0.1 to about 5% by weight, based on the total weight of the molding composition.

6. The molding composition according to any of the preceding claims, where the molding composition comprises styrene monomer content which has been reduced by at least about 5% by weight in comparison with the molding composition without the at least one zeolitic material.

7. A process for removal of styrene monomer from a molding composition, comprising at least one styrene polymer, comprising the steps of
a) provision of a solid molding composition, comprising at least one styrene polymer,
b) addition of a zeolitic material of MFI structure type, where the zeolitic material of MFI structure type added in step b) has been selected from the group consisting of crystalline aluminosilicates and titanium aluminosilicates, and is present in H form, and has a pore diameter in the range from 0.45 to 0.55 nm,
and
c) heating the mixture resulting from step b).

8. The process according to claim 7, where the styrene polymer provided in step a) has been selected from the group consisting of homo- and copolymers of styrene.

9. The process according to claim 8, where the styrene polymer has been selected from the group consisting of styrene homopolymer, standard polystyrene (general-purpose polystyrene (GPPS)), high-impact polystyrene (HIPS), styreneacrylonitrile copolymer (SAN), and acrylonitrilebutadiene-styrene (ABS).

10. The process according to any of claims 7 to 9, where the amount added in step a) of the styrene polymer is from about 95 to about 99.9% by weight, based on the total weight of the molding composition.

11. The process according to any of the preceding claims 7 to 10, where the amount added of the zeolitic material in step b) is from 0.1 to 5% by weight, based on the total weight of the molding composition.

12. The process according to any of claims 7 to 11, where the mixture resulting from step c) comprises styrene monomer content which has been reduced by at least about 5% by weight in comparison with the molding composition provided in step a).

13. The use of at least one zeolitic material of MFI structure type, where the zeolitic material of MFI structure type has been selected from the group consisting of crystalline aluminosilicates and titanium aluminosilicates, and is present in H form, and has a pore diameter in the range from 0.45 to 0.55 nm, for removal of styrene monomer from a molding composition comprising at least one styrene polymer.

## Revendications

1. Matériau de moulage, comprenant au moins un polymère contenant du styrène et au moins un matériau zéolithique de type structural MFI, dans lequel le matériau zéolithique de type structural MFI est choisi dans le groupe constitué par les aluminosilicates et les aluminosilicates de titane cristallins, et se présente sous forme H, et présente un diamètre de pores dans une plage allant de 0,45 à 0,55 nm.

2. Matériau de moulage selon la revendication précédente, dans lequel le polymère contenant du styrène est choisi dans le groupe constitué par les homo- et copolymères de styrène.

3. Matériau de moulage selon la revendication 2, dans lequel le polymère contenant du styrène est choisi dans le groupe constitué par l'homopolymère de styrène, le polystyrène standard (general purpose polystyrene (GPPS)), le polystyrène à résistance aux impacts élevée (high impact polystyrene (HIPS)), le copolymère de styrène-acrylonitrile (SAN) et l'acrylonitrilebutadiène-styrène (ABS).

4. Matériau de moulage selon l'une quelconque des revendications précédentes, dans lequel le polymère contenant du styrène est présent en une quantité d'environ 95 à environ 99,9 % en poids, par rapport au poids total du matériau de moulage.

5. Matériau de moulage selon l'une quelconque des revendications précédentes, dans lequel le matériau zéolithique est présent en une quantité d'environ 0,1 à environ 5 % en poids, par rapport au poids total du matériau de moulage.

6. Matériau de moulage selon l'une quelconque des revendications précédentes, dans lequel le matériau de moulage présente une teneur en monomère de styrène qui est réduite d'au moins environ 5 % en poids en comparaison du matériau de moulage sans le ou les matériaux zéolithiques.

7. Procédé d'élimination d'un monomère de styrène d'un matériau de moulage comprenant au moins un polymère contenant du styrène, comprenant les étapes suivantes :
a) la mise à disposition d'un matériau de moulage solide comprenant au moins un polymère contenant du styrène,
b) l'ajout d'un matériau zéolithique de type structural MFI, le matériau zéolithique de type structural MFI ajouté à l'étape b) étant choisi dans le groupe constitué par les aluminosilicates et les aluminosilicates de titane cristallins, et se présentant sous forme H, et présentant un diamètre de pores dans une plage allant de 0,45 à 0,55 nm,
et
c) le chauffage du mélange obtenu à l'étape b).

8. Procédé selon la revendication 7, dans lequel le polymère contenant du styrène mis à disposition à l'étape a) est choisi dans le groupe constitué par les homo- et copolymères de styrène.

9. Procédé selon la revendication 8, dans lequel le polymère contenant du styrène est choisi dans le groupe constitué par l'homopolymère de styrène, le polystyrène standard (general purpose polystyrene (GPPS)), le polystyrène à résistance aux impacts élevée (high impact polystyrene (HIPS)), le copolymère de styrène-acrylonitrile (SAN) et l'acrylonitrile-butadiène-styrène (ABS).

10. Procédé selon l'une quelconque des revendications 7 à 9, dans lequel le polymère contenant du styrène est ajouté à l'étape a) en une quantité d'environ 95 à environ 99,9 % en poids, par rapport au poids total du matériau de moulage.

11. Procédé selon l'une quelconque des revendications 7 à 10 précédentes, dans lequel le matériau zéolithique est ajouté à l'étape b) en une quantité de 0,1 à 5 % en poids, par rapport au poids total du matériau de moulage.

12. Procédé selon l'une quelconque des revendications 7 à 11, dans lequel le mélange obtenu à l'étape c) présente une teneur en monomère de styrène qui est réduite d'au moins environ 5 % en poids en comparaison du matériau de moulage mis à disposition à l'étape a).

13. Utilisation d'au moins un matériau zéolithique de type structural MFI, dans laquelle le matériau zéolithique de type structural MFI est choisi dans le groupe constitué par les aluminosilicates et les aluminosilicates de titane cristallins, et se présente sous forme H, et présente un diamètre de pores dans une plage allant de 0,45 à 0,55 nm, pour l'élimination d'un monomère de styrène d'un matériau de moulage comprenant au moins un polymère contenant du styrène.
